# EUROPEAN PATENT SPECIFICATION

(11) **EP 3 176 405 B1**
(45) Date of publication and mention of the grant of the patent: **20.05.2020**
(21) Application number: 16201845.1
(22) Date of filing: 02.12.2016
(51) Int. Cl.: F02C 3/10, F02C 3/30, F02C 9/54

(54) **TWO-SHAFT GAS TURBINE HAVING STEAM INJECTION MECHANISM**
DOPPELWELLENGASTURBINE MIT DAMPFINJEKTIONSMECHANISMUS
TURBINE À GAZ À DEUX ARBRES AYANT UN MÉCANISME D'INJECTION DE VAPEUR

(30) Priority: 03.12.2015 JP 2015236325
(43) Date of publication of application: 07.06.2017
(73) Proprietor: Mitsubishi Hitachi Power Systems, Ltd., Yokohama 220-8401 (JP)
(72) Inventor: TAKAHASHI, Kazuo, Yokohama, 220-8401 (JP); HIGUCHI, Shinichi, Yokohama, 220-8401 (JP); MYOREN, Chihiro, Yokohama, 220-8401 (JP); AKIYAMA, Ryou, Yokohama, 220-8401 (JP); TAKEDA, Takuya, Yokohama, 220-8401 (JP)
(74) Representative: MERH-IP Matias Erny Reichl Hoffmann Patentanwälte PartG mbB

(56) References cited:
- US-A1- 2009 320 438
- US-A1- 2012 017 600
- US-A1- 2014 325 990

## Description

### {Technical Field}

The present invention relates to a two-shaft gas turbine having a steam injection mechanism constituted by a gas generator provided with a high pressure turbine for driving a compressor, and a power turbine provided with a low pressure turbine, which is driven by an exhaust gas discharged from the high pressure turbine, and is for driving a load.

### {Background Art}

In JP-A-2012-47083 (Patent Literature 1), there is described a technology related to a two-shaft gas turbine, which achieves stabilization of the rotational frequency of each of the shafts of a gas generator and a power turbine by controlling opening of an inlet guide vane of a compressor during the load operation in the two-shaft gas turbine constituted by the compressor having the inlet guide vane, the gas generator provided with a high pressure turbine driven by a combustion gas generated in a combustor, and the power turbine provided with a low pressure turbine driven by an exhaust gas discharged from the high pressure turbine.

Further, In JP-A-2014-114707 (Patent Literature 2), there is described a technology related to a two-shaft gas turbine, which achieves control of the rotational frequency of a shaft of a gas generator, and control of the temperature of an exhaust gas discharged from a power turbine in the two-shaft gas turbine constituted by the compressor having an inlet guide vane, the gas generator provided with a high pressure turbine driven by a combustion gas generated in a combustor, and the power turbine provided with a low pressure turbine driven by the exhaust gas discharged from the high pressure turbine.

Further, in U.S. Patent No. 4, 823, 546 (Patent Literature 3), there is described a technology related to a two-shaft gas turbine, in which steam is injected in a combustor of the gas turbine to increase the flow rate of a combustion gas flowing into the turbine to thereby increase the output of the turbine in the two-shaft gas turbine constituted by a compressor, a gas generator provided with a high pressure turbine driven by the combustion gas generated in the combustor, and a power turbine provided with a low pressure turbine driven by an exhaust gas discharged from the high pressure turbine.

Further, US 2012/0017600 A1 relates to a combustor control method and a combustor controller calculating the combustion air flow and the fuel flow in a multi-shafts gas turbine and thereby calculating a fuel-air ratio necessary for stable combustion control.

Further, US 2014/0325990 A1 relates to a gas turbine having a control unit for determining whether a restriction value of a steam injection rate using a temperature, an opening of the inlet guide vanes, and the steam injection rate as indexes is satisfied, and controlling at least one of a temperature of air flowing into the compressor, the steam injection rate, and the inlet guide vane opening.

### {Citation List}

### {Patent Literature}

{Patent Literature 1} Japanese Patent Laid-open No. 2012-47083
{Patent Literature 2} Japanese Patent Laid-open No. 2014-114707
{Patent Literature 3} United States Patent No. 4,823,546
{Patent Literature 4} US 2012/0017600 A1
{Patent Literature 5} US 2014/0325990 A1

### {Summary of Invention}

### {Technical Problem}

In the two-shaft gas turbines described in Patent Literature 1 and Patent Literature 2, there is no consideration of the technology of injecting steam into the combustor of the gas turbine to increase the flow rate of the combustion gas flowing into the turbine to thereby increase the output of the turbine.

Further, in the two-shaft gas turbine described in Patent Literature 3, although there is disclosed the technology related to the two-shaft gas turbine, which injects steam into the combustor of the gas turbine to increase the flow rate of the combustion gas flowing into the turbine to thereby increase the output of the turbine, there is no consideration of a problem in increasing the surge margin of the compressor when injecting the steam.

An object of the present invention is to provide a two-shaft gas turbine having a steam injection mechanism which makes it possible to increase a surge margin of a compressor when steam is injected into a combustor of the gas turbine to increase an output of the turbine.

### {Solution to Problem}

According to the present invention, a two-shaft gas turbine having a steam injection mechanism is defined in claim 1 and comprises, inter alia:
a compressor having an inlet guide vane to control a flow rate of air to be introduced,
a combustor to mix the air compressed by the compressor with fuel and combust the air with the fuel to generate a combustion gas,
a turbine having a high pressure turbine driven by the combustion gas generated in the combustor and a low pressure turbine disposed on a downstream side of the high pressure turbine,
a heat recovery steam generator to generate steam using an exhaust gas discharged from the low pressure turbine as a heat source,
a steam system to supply the combustor with the steam generated by the heat recovery steam generator,
a fuel valve provided to a fuel system to supply the combustor with the fuel and control a flow rate of the fuel to be supplied to the combustor,
a steam valve provided to the steam system and control a flow rate of the steam to be supplied from the heat recovery steam generator to the combustor through the steam system,
a load to be driven by the turbine,
a compressor shaft to connect the high pressure turbine with the compressor to each other, and/ or
a low pressure turbine shaft to connect the low pressure turbine with the load to each other,
wherein the high pressure is configured to drive the compressor, and the low pressure turbine is configured to drive the load,
characterized in that
the two-shaft gas turbine having the steam injection mechanism further comprising:
   at least one of a rotational frequency meter to measure a rotational frequency of the compressor; an inlet guide vane position gauge to measure opening of the inlet guide vane provided to the compressor; a steam valve position gauge to measure opening of the steam valve provided to the steam system; and a flow rate meter to measure the flow rate of the steam generated by the heat recovery steam generator and to be supplied to the combustor; and/ or
   a control system calculates and outputs command signals to operate openings of the fuel valve, the steam valve, and the inlet guide vane, respectively, based on measurement signals obtained by one of the rotational frequency meter, the inlet guide vane position gauge, the steam valve position gauge and the flow rate meter.

### {Advantageous Effects of Invention}

According to the present invention, it is possible to realize a two-shaft gas turbine having the steam injection mechanism which makes it possible to increase a surge margin of the compressor when steam is injected into the combustor of the gas turbine to increase an output of the turbine.

### {Brief Description of Drawings}

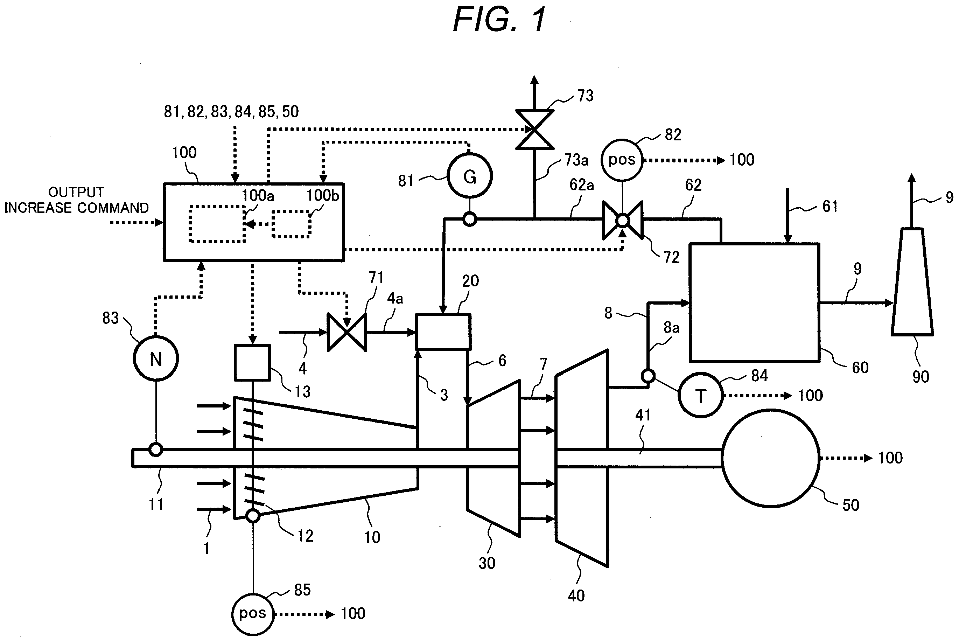

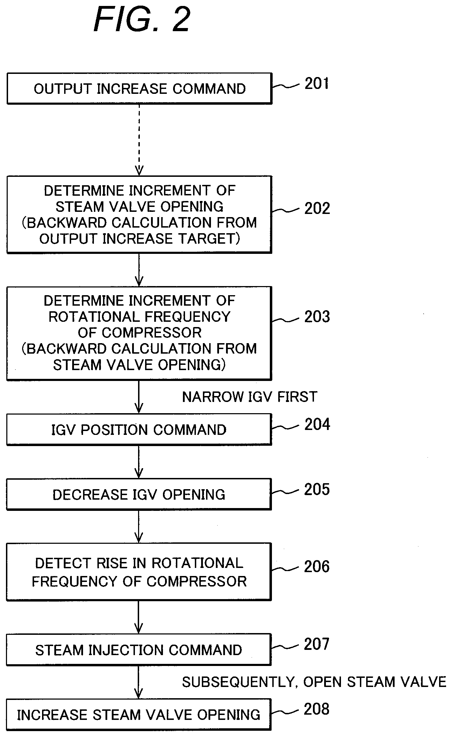

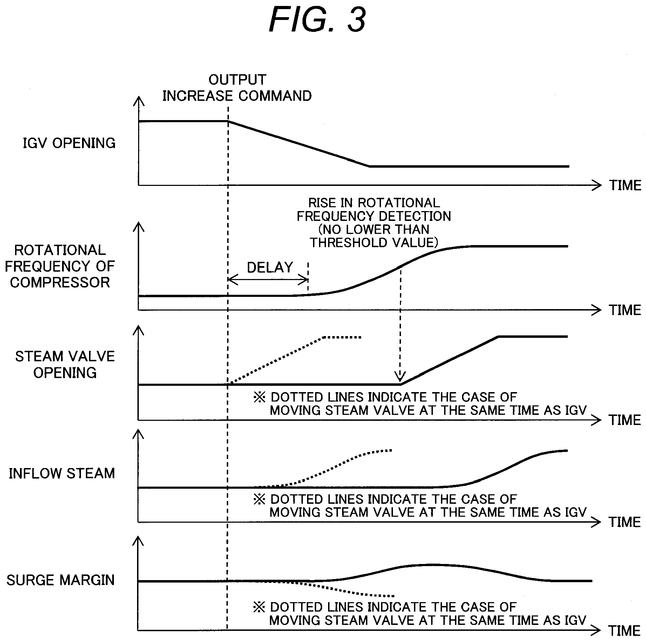

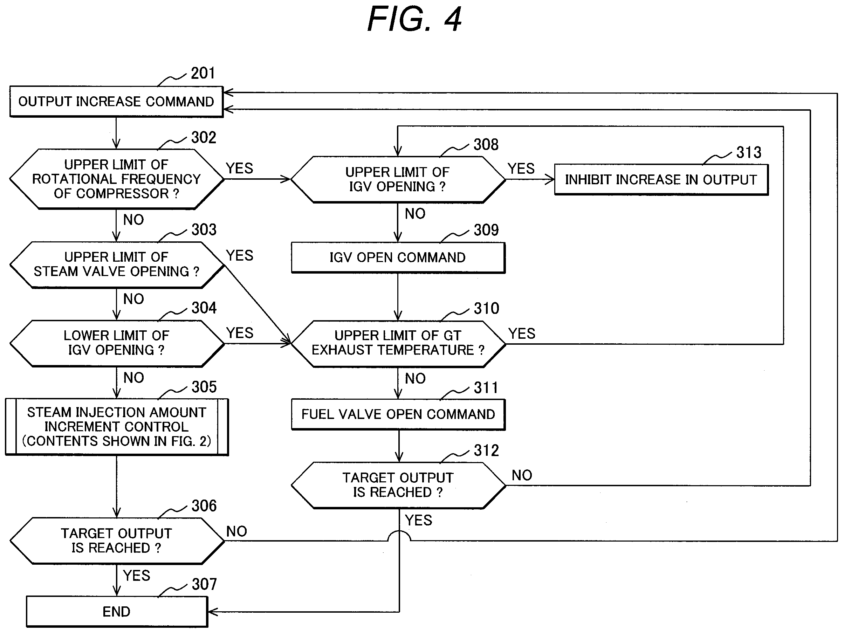

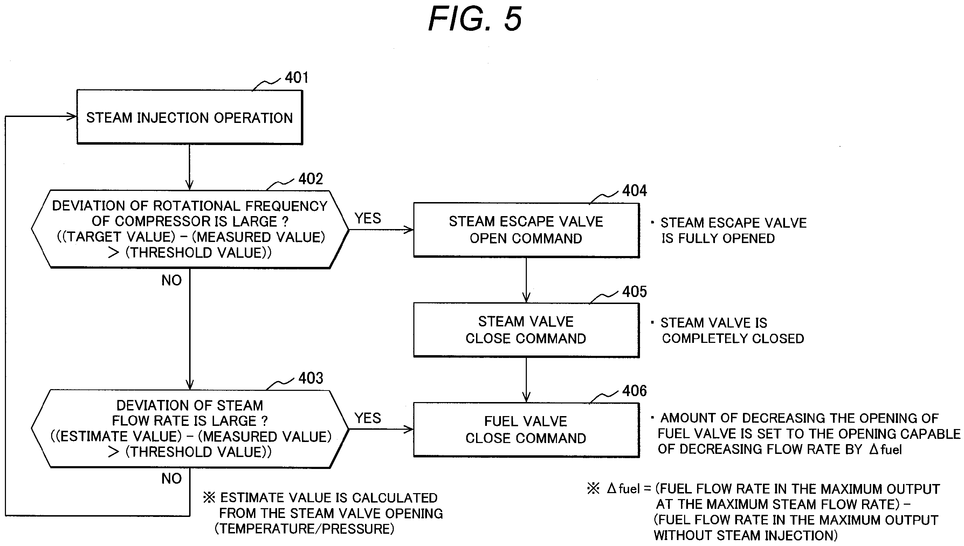

{Fig. 1} Fig. 1 is a schematic system diagram showing a two-shaft gas turbine having a steam injection mechanism according to a first embodiment of the invention.
{Fig. 2} Fig. 2 is a control flow chart in the ca.se of performing advanced control on opening of an inlet guide vane in the two-shaft gas turbine having the steam injection mechanism according to the first embodiment shown in Fig. 1.
{Fig. 3} Fig. 3 is a control characteristic diagram showing the characteristics of principal devices of the two-shaft gas turbine and the surge margin in the case of performing the advanced control on the opening of the inlet guide vane in the two-shaft gas turbine having the steam injection mechanism according to the first embodiment shown in Fig. 1.
{Fig. 4} Fig. 4 is a control flow chart showing an order of priority for the control of controlling a steam valve, the inlet guide vane, and a fuel valve in the case of increasing an output of the gas turbine in the two-shaft gas turbine having the steam injection mechanism according to the first embodiment shown in Fig. 1.
{Fig. 5} Fig. 5 is a control flow chart showing interlock of the control in the case in which an emergency occurs during the operation of the gas turbine in the two-shaft gas turbine having the steam injection mechanism according to the first embodiment shown in Fig. 1.

### {Description of Embodiments}

The two-shaft gas turbine having the steam injection mechanism according to an embodiment of the present invention will hereinafter be described citing the drawings.

### {Embodiment 1}

A schematic configuration of the two-shaft gas turbine having the steam injection mechanism according to the first embodiment of the present invention will be described using Fig. 1.

Fig. 1 is a schematic system diagram showing the two-shaft gas turbine having the steam injection mechanism according to the first embodiment of the present invention.

In the two-shaft gas turbine having the steam injection mechanism according to the first embodiment of the present invention shown in Fig. 1, a gas turbine main body is provided with a compressor 10 for compressing air 1 taken in from the atmosphere to compress compressed air 3, a combustor 20 for mixing the compressed air 3 compressed by the compressor 10 and fuel 4 supplied through a fuel system 4a with each other to combust the mixture to generate a combustion gas 6 with high temperature, and a high pressure turbine 30 driven by the combustion gas 6 generated by the combustor 20.

An inlet guide vane 12 for controlling the flow rate of the air 1 to be introduced to the compressor 10 is disposed in the inlet of the compressor 10, and the inlet guide vane 12 is configured so as to control the opening of a plurality of vanes arranged circularly by driving the vanes with a guide vane driving device 13 to thereby control the flow rate of the air 1 to be introduced in the compressor 10 through spaces between the vanes.

The high pressure turbine 30 is connected to the compressor 10 via a compressor shaft 11, and the compressor 10 is driven via the compressor shaft 11 due to the rotation of the high pressure turbine 30.

An exhaust gas 7 discharged from the high pressure turbine 30 flows into a low pressure turbine 40 disposed on the downstream side of the high pressure turbine 30 to drive the low pressure turbine 40.

The low pressure turbine 40 is connected to a generator 50 via a low pressure turbine shaft 41, and configured that the generator 50 is driven via the low pressure turbine shaft 41 due to the rotation of the low pressure turbine 40 to generate electricity. Further, the electricity generated by the generator 50 is transmitted to an electrical power system not shown.

Further, an amount of the load necessary for the generator 50 to generate the electricity is measured by a detector (not shown), and then input to a control system 100 described below.

As described above, the two-shaft gas turbine having the steam injection mechanism according to the present embodiment constitutes the two-shaft gas turbine having rotor shafts, namely the compressor shaft 11 for connecting the compressor 10 and the high pressure turbine 30 to each other, and the low pressure turbine shaft 41 for connecting the low pressure turbine 40 and the generator 50 to each other, independent of each other.

In the two-shaft gas turbine having the steam injection mechanism according to the present embodiment, a heat recovery steam generator 60, which exchanges heat with feed-water 61 using turbine exhaust 8 discharged from the low pressure turbine 40 after driving the low pressure turbine 40 as a heat source to generate steam 62, is disposed on the downstream side of the low pressure turbine 40.

There is adopted a configuration in which the steam 62 generated by the heat recovery steam generator 60 is injected into the combustor 20 via the steam injection mechanism (not shown) to increase the flow rate of the combustion gas flowing into the turbine to thereby increase the output of the turbine in the case in which an output increase command for the gas turbine is issued.

The turbine exhaust 8, on which the heat exchange with the feed-water 61 has been performed by the heat recovery steam generator 60, is discharged outside from the heat recovery steam generator 60 described above as exhaust 9.

In the two-shaft gas turbine having the steam injection mechanism according to the present embodiment, in order to increase the output of the turbine by increment of the flow rate of the combustion gas flowing into the turbine, a steam system 62a for supplying the combustor 20 with the steam 62 generated in the heat recovery steam generator 60 is provided with a steam valve 72 for controlling steam flow rate, and a flow rate meter 81 for measuring the steam flow rate.

The compressor shaft 11 of the compressor 10 is provided with a rotational frequency meter 83 for measuring the rotational frequency of the compressor.

The fuel system 4a for supplying the combustor 20 with the fuel 4 is provided with a fuel valve 71 for controlling the fuel flow rate.

In the middle of the steam system 62a for supplying the combustor 20 with the steam 62 generated by the heat recovery steam generator 60, a branched pipe 73a branched from the steam system 62a is disposed, and the branched pipe 73a is provided with a steam escape valve 73 for letting a part of the steam 62 flowing down through the steam system 62a out from the system through the branched pipe 73a.

The steam valve 72 is provided with a steam valve position gauge 82 for measuring the opening of the steam valve 72.

Further, a turbine exhaust system 8a for discharging the turbine exhaust 8 from the low pressure turbine 40 to the heat recovery steam generator 60 is provided with an exhaust temperature meter 84 for measuring the temperature of the turbine exhaust 8.

The inlet guide vane 12 of the compressor 10 is provided with an inlet guide vane position gauge 85 for measuring the opening of the inlet guide vane 12.

In the two-shaft gas turbine having the steam injection mechanism according to the present embodiment, a control system 100 for controlling the two-shaft gas turbine is provided, and there is adopted a configuration in which measurement signals obtained by the flow rate meter 81, the steam valve position gauge 82, the rotational frequency meter 83, the exhaust temperature meter 84, and the inlet guide vane position gauge 85 described above, and detectors (not shown) of the generator 50 as the load are input to the control system 100 described above.

Further, the exhaust 9 discharged from the heat recovery steam generator 60 is discharged into the atmosphere via a chimney 90.

Next, the control contents by the control system 100 for controlling the two-shaft gas turbine having the steam injection mechanism according to the first embodiment of the invention will be described using Fig. 2 through Fig. 5.

Fig. 2 is a control flow chart in the case of performing the advanced control on the opening of the inlet guide vane in the two-shaft gas turbine having the steam injection mechanism according to the first embodiment shown in Fig. 1, and Fig. 3 is a control characteristic diagram showing the principal devices of the two-shaft gas turbine and the surge margin in the case of performing the advanced control on the opening of the inlet guide vane in the two-shaft gas turbine having the steam injection mechanism according to the first embodiment shown in Fig. 1.

In Fig. 1 through Fig. 3, in a calculator 100a provided to the control system 100, there are incorporated each of the step 201 of the output increase command, the step 202 of determining an increment in the steam valve opening, the step 203 of determining an increment in rotational frequency of the compressor, the step 204 of an IGV position command, the step 205 of decreasing the IGV opening, the step 206 of detecting rise in rotational frequency of the compressor, the step 207 of a steam injection command, and the step 208 of increasing the steam valve opening as shown in Fig. 2.

Further, in the two-shaft gas turbine according to the present embodiment, as shown in the step 201 of the output increase command shown in Fig. 2, when the output increase command is issued to the control system 100 for controlling the two-shaft gas turbine, the output increase command in the step 201 of the output increase command is input to the calculator 100a provided to the control system 100, and due to the calculation by the calculator 100a, the increment in the steam valve opening is determined by backward calculation from the output increase target as shown in the step 202 of determining the increment in the steam valve opening shown in Fig. 2.

In the calculator 100a provided to the control system 100 described above, there is adopted a configuration of outputting an operation signal for driving the guide vane driving device 13 for controlling the opening of the vanes of the inlet guide vane 12 provided to the compressor 10, outputting an operation signal for controlling the opening of the fuel valve 71 provided to the fuel system 4a to thereby control the flow rate of the fuel to be supplied to the combustor 20, outputting an operation signal for controlling the opening of the steam valve 72 provided to the steam system 62a for supplying the combustor 20 with the steam 62 generated by the heat recovery steam generator 60 to thereby control the flow rate of the steam to be supplied to the combustor 20, and outputting an operation signal for controlling the opening of the steam escape valve 73 provided to the branched pipe 73a branched from the steam system 62a described above to thereby control the flow rate of the partial steam to be let out from the system out of the steam 62 flowing down through the steam system 62a due to the calculation by the calculator 100a described above based on the measurement signals respectively input from the flow rate meter 81, the steam valve position gauge 82, the rotational frequency meter 83, the exhaust temperature meter 84, and the inlet guide vane position gauge 85 as shown in the flow charts and the characteristic diagram shown in Fig. 2 through Fig. 5 described later.

Further, a setting device 100b provided to the control system 100 is made to set an upper limit value of the rotational frequency of the compressor, an upper limit value of the opening of the steam valve, an upper limit value of the IGV opening, a lower limit of the IGV opening, and a target output value of the gas turbine, and input these values to the calculator 100a provided to the control system 100 described above, and there is adopted a configuration in which the variety of upper limit values and lower limit values can always be referred to during the calculation in the calculator 100a described above.

Subsequently, after the increment in the steam valve opening is determined in the step 202 of determining the increment in the steam valve opening shown in Fig. 2, then the process proceeds to the step 203 of determining the increment in the rotational frequency of the compressor shown in Fig. 2, and the increment in the rotational frequency of the compressor is determined by the backward calculation from the steam valve opening with respect to the compressor 10 due to the calculation by the calculator 100a described above.

Then, the operation signal obtained by the calculation by the calculator 100a described above is output to perform the control of narrowing the inlet guide vane 12 first, and then perform the control of operating the steam valve 72.

Specifically, as shown in the step 204 of the IGV position command shown in Fig. 2, in order to perform the control of narrowing the inlet guide vane (IGV) 12 first, the IGV position command is output from the calculator 100a of the control system 100 to the inlet guide vane 12 of the compressor 10, and then, the process proceeds to the step 205 of decreasing the IGV opening shown in Fig. 2, and then the control of decreasing the IGV opening of the inlet guide vane (IGV) 12 is performed due to the calculation by the calculator 100a described above.

Then, when the opening of the inlet guide vane (IGV) 12 decreases, the rotational frequency of the compressor rises after passing through the time delay from the output increase command as shown in the control characteristic diagram in Fig. 3. Therefore, the process proceeds to the step 206 of detecting the rise in rotational frequency of the compressor shown in Fig. 2 for detecting the rise in the rotational frequency.

The rise in rotational frequency of the compressor is detected at the time point when the rotational frequency of the compressor rises to a value equal to or higher than a threshold value as shown in the control characteristic diagram of Fig. 3, and due to the control by the calculator 100a of the control system 100, the process proceeds to the step 207 of the steam injection command, and a valve opening operation is performed on the steam valve 72 provided to the steam system 62a for supplying the combustor 20 with the steam 62 generated by the heat recovery steam generator 60.

Subsequently, due to the control by the calculator 100a of the control system 100., as shown in the control characteristic diagram of Fig. 3, the process proceeds to the step 208 of increasing the steam valve opening for gradually increasing the valve opening of the steam valve 72 to control the valve opening of the steam valve 72 to thereby control the amount of the steam 62, which has been generated by the heat recovery steam generator 60 and is then supplied to the combustor 20 through the steam valve 72 provided to the steam system 62a. The control system of the two-shaft gas turbine according to the present embodiment is configured in such a manner as described above.

Here, the reason that the inlet guide vane (IGV) 12 is first controlled to be narrowed is as follows. That is, if the steam valve 72 is first operated, or operated to open at roughly the same time as the IGV 12, the rise in rotational frequency of the compressor 10 is delayed, and there is a possibility that the surge margin transiently deceases due to the increase in inflow of steam 62 flowing into the combustor 20 through the steam valve 72. Therefore, as shown in the control characteristic diagram of Fig. 3, the steam valve 72 is operated so as to increase the opening after the rise in rotational frequency of the compressor 10 has been detected.

As a result, as shown in the control characteristic diagram of Fig. 3, since the surge margin gently increases, it is possible to avoid the situation that the surge margin transiently decreases.

In contrast, if the valve opening operation is performed on the steam valve 72 at the same time as, for example, the operation of the inlet guide vane (IGV) 12, as indicated by the dotted lines in the control characteristic diagram in Fig. 3, the opening of the steam valve 72 rapidly increases at the same time as the output increase command, and the flow rate of the inflow steam 62 flowing into the combustor 20 through the steam valve 72 increases with a slight delay from the increase in the opening of the steam valve 72. Therefore, as a result, there is a problem that the surge margin transiently decreases due to the increase in inflow of the steam 62 as indicated by the dotted lines.

Therefore, in the two-shaft gas turbine according to the present embodiment, as explained with reference to the flow chart shown in Fig. 2, there is performed the control in which after the rise in rotational frequency of the compressor 10 is detected in the step 206 of detecting the rise in rotational frequency of the compressor, the process proceeds to the step 207 of the steam injection command and the step 208 of increasing the steam valve opening to control the valve opening of the steam valve 72 to thereby increase the amount of the steam 62, which has been generated by the heat recovery steam generator 60 and is supplied to the combustor 20 through the steam valve 72 provided to the steam system 62a. Therefore, it becomes possible to avoid the problem that the surge margin transiently decreases due to the increase in inflow of the steam 62.

Specifically, in the calculator 100a described above provided to the control system described above, in the state in which the amount of steam flowing into the combustor 20 is 20% through 30% of the air taken in the compressor 10 described above, the rotational frequency of the compressor 10 described above is raised by 2% through 7% of the rated rotational frequency, or preferably by 3% through 5% of the rated rotational frequency.

In the step 206 of detecting the rise in rotational frequency of the compressor described above, there is performed the control in which the detection threshold value of the rotational frequency of the compressor is raised in accordance with the target value of the amount of steam flowing into the combustor 20, and then after the rise in rotational frequency has been detected, the opening of the steam valve 72 is increased.

Incidentally, in the two-shaft gas turbine having the steam injection mechanism according to the present embodiment, the order of priority for the control is set as shown in the flowchart of Fig. 4 between the steam valve 72, the inlet guide vane (IGV) 12, and the fuel valve 71 in the calculator 100a of the control system 100.

Specifically, as described in the flowchart shown in Fig. 4, in the calculator 100a provided to the control system 100, there are incorporated the step 201 of the output increase command to the gas turbine shown in Fig. 4, the step 302 of determining the upper limit of the rotational frequency of the compressor, the step 303 of determining the upper limit of the steam valve opening, the step 304 of determining the lower limit of the IGV opening, the step 305 of incremental control of the steam injection amount, the step 306 of determining attainment of the target output, and the step 307 of an end for ending the control.

Further, in the calculator 100a of the control system 100 of the two-shaft gas turbine having the steam injection mechanism according to the present embodiment, since the rotational frequency of the compressor 10 is raised due to the calculation by the calculator 100a described above based on the step 201 of the output increase command to the gas turbine, the process proceeds first to the step 302 of determining the upper limit of the rotational frequency of the compressor.

If it is determined in the step 302 of determining the upper limit of the rotational frequency of the compressor that the rotational frequency of the compressor does not reach the upper limit value of the rotational frequency of the compressor set to the setting device 100b, then the process proceeds to the step 303 of determining the upper limit of the steam valve opening.

In the step 303 of determining the upper limit of the steam valve opening, the opening of the steam valve 72 provided to the steam system 62a is checked by calculating the opening from the measurement value of the steam flow rate obtained by the flow rate meter 81 provided to the steam system 62a for supplying the combustor 20 with the steam 62 generated by the heat recovery steam generator 60, or by receiving the measurement signal from the steam valve position gauge 82.

Then, if it is determined by the calculation of the calculator 100a in the step 303 of determining the upper limit of the steam valve opening that the opening of the steam valve 72 does not reach the upper limit value of the steam valve opening set in the setting device 100b, then the process proceeds to the step 304 of determining the lower limit of the IGV opening.

If it is determined in the step 304 of determining the lower limit of the IGV that the opening of the inlet guide vane 12 for controlling the flow rate of the air 1 to be introduced into the compressor 10 does not reach the lower limit value of the IGV opening set to the setting device 100b by the calculation by the calculator 100a described above, then the process proceeds to the step 305 of the increment control of the steam injection amount.

Then, the valve opening operation is performed on the steam valve 72 provided to the steam system 62a for supplying the combustor 20 with the steam 62 generated by the heat recovery steam generator 60 based on the calculation by the calculator 100a described above in the step 305 of the increment control of the steam injection amount to gradually increase the valve opening of the steam valve 72 as shown in the control characteristic diagram of Fig. 3 to thereby continuously increase the amount of the steam 62, which has been generated by the heat recovery steam generator 60, and is then supplied to the combustor 20.

Then, the output of the gas turbine is increased while performing the step 305 of the increment control of the steam injection amount, and then the process proceeds to the subsequent step 306 of determining attainment of the target output.

If it is determined in the step 306 of determining the attainment of the target output that the output of the gas turbine has reached the target output set in the setting device 100b based on the calculation by the calculator 100a described above, then the process proceeds to the step 307 of the end of ending the increment control of the steam injection amount to increase the opening of the steam valve 72 of the gas turbine and terminate the operation of increasing the steam injection amount.

Further, if it has been determined in the step 306 of determining the attainment of the target output that the output of the gas turbine does not reach the target output set in the setting device 100b based on the calculation by the calculator 100a described above, the process returns to the step 201 of the output increase command, and as a result, the increase in output to the gas turbine is newly instructed by the calculator 100a of the control system 100 described above.

Incidentally, in the flowchart showing the order of priority for the control shown in Figure 4, if it has been determined in the step 302 of determining the upper limit of the rotational frequency of the compressor that the rotational frequency of the compressor has reached the upper limit based on the calculation by the calculator 100a described above on the grounds that the rotational frequency of the compressor 10 rises based on the step 201 of the output increase command to the gas turbine and so on, then the process proceeds to the step 308 of determining the upper limit of the IGV opening.

Then, if it is determined in the step 308 of determining the upper limit of the IGV opening that the IGV opening has reached the upper limit based on the calculation by the calculator 100a described above, then the process proceeds to the step 313 of inhibiting the increase in output to stop the operation of increasing the output of the two-shaft gas turbine.

Further, if it is determined in the step 308 of determining the upper limit of the IGV opening that the IGV opening has not reached the upper limit based on the calculation by the calculator 100a described above, then the process proceeds to the step 309 of an IGV open command to perform an open operation on the inlet guide vane (IGV) 12 based on the control by the calculator 100a.

Then, in the calculation by the calculator 100a of the control system 100, in the case in which it has been determined in the step 303 of determining the upper limit of the steam valve opening that the steam valve opening has reached the upper limit, or in the case in which it has been determined in the step 304 of determining the lower limit of the IGV opening that the IGV opening has reached the lower limit based on the determination results of the step 303 of determining the upper limit of the steam valve opening described above and the step 304 of determining the lower limit of the IGV opening, the process proceeds to the subsequent step 310 of determining the upper limit of the GT exhaust temperature.

If it is determined in the step 310 of determining the upper limit of the GT exhaust temperature that the GT exhaust temperature measured by the exhaust temperature meter 84 provided to the turbine exhaust system 8a for measuring the temperature of the turbine exhaust 8 discharged from the low pressure turbine 40 has reached the upper limit value of the GT exhaust temperature set to the setting device 100b, the process proceeds to the step 308 of determining the upper limit of the IGV opening described above to determine whether or not the IGV opening has reached the upper limit, as a result.

Further, if it is determined in the step 310 of determining the upper limit of the GT exhaust temperature that the GT exhaust temperature measured by the exhaust temperature meter 84 has not reached the upper limit value of the GT exhaust temperature set to the setting device 100b, the process proceeds to the subsequent step 311 of a fuel valve open command, and there is performed the control of controlling the opening of the fuel valve 71 provided to the fuel system 4a to increase the flow rate of the fuel to be supplied to the combustor 20 based on the calculation by the calculator 100a to thereby continuously increase the output of the gas turbine.

Then, the process proceeds to the step 312 of determining the attainment of the target output by the output of the gas turbine, and if it is determined in the step 312 of determining the attainment of the target output that the output of the gas turbine has not reached the target output of the gas turbine set in the setting device 100b, the process returns to the step 201 of the output increase command described above to newly issue the output increase command to the gas turbine from the calculator 100a of the control system 100 described above.

Then, if it is determined in the step 312 of determining the attainment of the target output by the output of the gas turbine that the output of the gas turbine has reached the target output of the gas turbine set to the setting device 100b, the process proceeds to the step 307 of the end to terminate the operation of opening the fuel valve 71 of the gas turbine.

Incidentally, in the two-shaft gas turbine having the steam injection mechanism according to the present embodiment, if the rotational frequency of the compressor dramatically drops, it becomes unachievable to ensure the surge margin. Therefore, it is necessary to stop the inflow of the steam 62 into the combustor 20 of the gas turbine due to the open valve of the steam valve 72 provided to the steam system 62a.

In this case, even if the steam valve 72 is closed, a part of the steam 62 remaining in the steam system 62a flows into the combustor 20. Therefore, it is possible to open the steam escape valve 73 provided to the branched pipe 73a branched from the steam system 62a to let the part of the steam 62 flowing down through the steam system 62a out from the system through the branched pipe 73a to thereby decrease the inflow amount of the steam 62 flowing into the combustor 20.

Further, if the inflow amount of the steam 62 injected into the combustor 20 rapidly decreases, the fuel-air ratio of the combustor 20 rises, and the firing temperature (the exhaust temperature) of the combustion gas 6 generated in the combustor 20 described above also rises. Therefore, it is possible to narrow the opening of the fuel valve 71 to thereby decrease the flow rate of the fuel 4 to be supplied to the combustor 20 by the fuel valve 71 provided to the fuel system 4a, and thus avoid the situation that the temperature of the combustion gas 6 generated in the combustor 20 exceeds the temperature upper limit.

Therefore, in the two-shaft gas turbine having the steam injection mechanism according to the present embodiment, in the case in which there occurs the emergency that the rotational frequency of the compressor 10 or the inflow amount of the steam dramatically decreases, there is set the interlock for preventing the compressor 10 from running into the surge state or the exhaust temperature from exceeding the upper limit of the temperature as shown in Fig. 5.

Specifically, as described in the flowchart shown in Fig. 5, in the calculator 100a provided to the control system 100, there are incorporated the step 401 of a steam injection operation, the step 402 of determining a large deviation of the rotational frequency of the compressor, the step 403 of determining a large deviation of the steam flow rate, the step 404 of a steam escape valve open command, the step 405 of a steam valve close command, and the step 406 of a fuel valve close command, respectively as shown in Fig. 5.

Further, in the calculator 100a of the control system 100 of the two-shaft gas turbine having the steam injection mechanism according to the present embodiment, in the step 401 of the steam injection operation to the gas turbine shown in Fig. 5, there is performed the steam injection operation of performing the open valve operation on the steam valve 72 in the step 207 of the steam injection command and the step 208 of increasing the steam valve opening in the flowchart shown in Fig. 2 to thereby increase the amount of the steam 62, which has been generated by the heat recovery steam generator 60 and is then supplied to the combustor 20 as shown in the control characteristic diagram of Fig. 3.

Further, when performing the steam injection operation in the step 401 of the steam injection operation, as the interlock for preventing the compressor 10 from running into the surge state in the case in which the emergency of dramatically decreasing the rotational frequency of the compressor 10 occurs, in the case in which the rotational frequency of the compressor 10 dramatically decreases, the process proceeds to the step 402 of determining the large deviation of the rotational frequency of the compressor ((target value)-(measured value)>(threshold value)) to determine the large deviation of the rotational frequency of the compressor ((target value)-(measured value)>(threshold value)), namely whether or not the deviation between the measured value of the rotational frequency of the compressor 10 obtained by the rotational frequency meter 83 and the target value set in the setting device 100b of the control system 100 exceeds the threshold value determined separately to be regarded as the large deviation.

If it is determined in the step 402 of determining the large deviation of the rotational frequency of the compressor that the deviation of the rotational frequency of the compressor satisfies ((target value)-(measured value) >(threshold value)) to be regarded as the large deviation of the rotational frequency of the compressor, the process proceeds to the subsequent step 404 of the steam escape valve open command to open the steam escape valve 73 provided to the branched pipe 73a branched from the steam system 62a to let the part of the steam 62 flowing down through the steam system 62a out from the system through the branched pipe 73a to thereby decrease the inflow amount of the steam 62 flowing into the combustor 20.

Then, the process proceeds to the step 405 of the steam valve close command to close the steam valve 72 provided to the steam system 62a to thereby stop the steam 62 generated by the heat recovery steam generator from flowing into the combustor 20 of the gas turbine through the steam system 62a.

Then, the process proceeds from the step 405 of the steam valve close command to the step 406 of the fuel valve close command to narrow the opening of the fuel valve 71 provided to the fuel system 4a to thereby decrease the flow rate of the fuel 4 to be supplied to the combustor 20.

Specifically, if the inflow amount of the steam 62 injected into the combustor 20 rapidly decreases, the fuel-air ratio of the combustor 20 rises and the firing temperature (the exhaust temperature) of the combustion gas 6 generated in the combustor 20 described above also rises. Therefore, in the step 406 of the fuel valve close command, by narrowing the opening of the fuel valve 71 to decrease the flow rate of the fuel 4 to be supplied to the combustor 20 using the fuel valve 71 provided to the fuel system 4a, the situation that the temperature of the combustion gas 6 generated in the combustor 20 exceeds the upper limit of the temperature is avoided.

Further, when performing the steam injection operation in the step 401 of the steam injection operation, if the inflow amount of the steam 62 to be injected into the combustor 20 rapidly decreases, the fuel-air ratio of the combustor 20 rises, and the firing temperature (the exhaust temperature) of the combustion gas 6 generated in the combustor 20 described above rises. Therefore, as the interlock of avoiding the emergency that the firing temperature (the exhaust temperature) of the combustion gas 6 by the combustor 20 rises, if it is determined in the step 402 of determining the large deviation of the rotational frequency of the compressor that the deviation of the rotational frequency of the compressor satisfies ((target value) - (measured value) ≤(threshold value)) not to be regarded as the large deviation of the rotational frequency of the compressor, the process proceeds to the subsequent step 403 of determining the large deviation of the steam flow rate ((estimate value)-(measured value)>(threshold value)).

Then, if it is determined in the step 403 of determining the large deviation of the steam flow rate ((estimate value) - (measured value)>(threshold value)) that the deviation of the steam flow rate satisfies ((estimate value)-(measured value)≤(threshold value)) not to be regarded as the large deviation of the steam flow rate, the process returns to the step 401 of the steam injection operation according to the flowchart.

In the step 403 of determining the large deviation of the steam flow rate ((estimate value)-(measured value)>(threshold value)), the estimate value of the steam flow rate of the steam 62 is calculated from the opening (in addition to the temperature and the pressure) of the steam valve 72.

Then, if it is determined in the step 403 of determining the large deviation of the steam flow rate ((estimate value)-(measured value)>(threshold value)) that the deviation of the steam flow rate satisfies ((estimate value)-(measured value)>(threshold value)) to be regarded as the large deviation of the steam flow rate, the process proceeds to the step 406 of the fuel valve close command to narrow the opening of the fuel valve 71 provided to the fuel system 4a to thereby decrease the flow rate of the fuel 4 to be supplied to the combustor 20.

Specifically, if the inflow amount of the steam 62 injected into the combustor 20 rapidly decreases, the fuel-air ratio of the combustor 20 rises and the firing temperature (the exhaust temperature) of the combustion gas 6 generated in the combustor 20 described above also rises. Therefore, as described above, in the step 406 of the fuel valve close command, by narrowing the opening of the fuel valve 71 to decrease the flow rate of the fuel 4 to be supplied to the combustor 20 using the fuel valve 71 provided to the fuel system 4a, the situation that the temperature of the combustion gas 6 generated in the combustor 20 exceeds the upper limit of the temperature is avoided.

The amount of decreasing the opening of the fuel valve 71 is set to the opening capable of decreasing the flow rate of the fuel 4 by Δfuel. Here, Δfuel is defined as follows. Δfuel=(fuel flow rate in the maximum output at the maximum steam flow rate) - (fuel flow rate in the maximum output without steam injection).

According to the two-shaft gas turbine having the steam injection mechanism related to the present embodiment describe above, it is possible to realize the two-shaft gas turbine having the steam injection mechanism which makes it possible to increase the surge margin of the compressor when injecting steam in the case of injecting the steam into the combustor of the gas turbine to increase the output of the turbine.

### {Reference Signs List}

1 air, 4 fuel, 8 turbine exhaust, 10 compressor, 12 inlet guide vane, 13 guide vane driving device, 20 combustor, 30 high pressure turbine, 40 low pressure turbine, 50 generator, 60 heat recovery steam generator, 62 steam, 62a steam system, 71 fuel valve, 72 steam valve, 73 steam escape valve, 81 flow rate meter, 82 steam valve position gauge, 83 rotational frequency meter, 84 exhaust temperature meter, 85 inlet guide vane position gauge, 100 control system, 100a calculator, 100b setting device

## Claims

1. A two-shaft gas turbine having a steam injection mechanism, comprising: a compressor (10) having an inlet guide vane (12) to control a flow rate of air (1) to be introduced,
a combustor (20) to mix the air compressed by the compressor (10) with fuel (4) and combust the air with the fuel (4) to generate a combustion gas (6),
a turbine having a high pressure turbine (30) driven by the combustion gas (6) generated in the combustor (20) and a low pressure turbine (40) disposed on a downstream side of the high pressure turbine (30),
a heat recovery steam generator (60) to generate steam (62) using an exhaust gas (8) discharged from the low pressure turbine (40) as a heat source,
a steam system (62a) to supply the combustor (20) with the steam (62) generated by the heat recovery steam generator (60),
a fuel valve (71) provided to a fuel system (4a) to supply the combustor (20) with the fuel (4) and control a flow rate of the fuel (4) to be supplied to the combustor (20),
a steam valve (72) provided to the steam system (62a) and control a flow rate of the steam (62) to be supplied from the heat recovery steam generator (60) to the combustor (20) through the steam system (62a),
a load (50) to be driven by the turbine,
a compressor shaft (11) to connect the high pressure turbine (30) with the compressor (10) to each other, and
a low pressure turbine shaft (41) to connect the low pressure turbine (40) with the load (50) to each other,
wherein the high pressure turbine (30) is configured to drive the compressor (10), and the low pressure turbine (40) is configured to drive the load (50),
**characterized in that**
the two-shaft gas turbine having the steam injection mechanism further comprising:
at least one of a rotational frequency meter (83) to measure a rotational frequency of the compressor (10) ; an inlet guide vane position gauge (85) to measure opening of the inlet guide vane (12) provided to the compressor (10); a steam valve position gauge (82) to measure opening of the steam valve (72) provided to the steam system (62a) ; and a flow rate meter (81) to measure the flow rate of the steam (62) generated by the heat recovery steam generator (60) and to be supplied to the combustor (20); and
a control system (100) configured to calculate and output command signals to operate openings of the fuel valve (71), the steam valve (72), and the inlet guide vane (12), respectively, based on measurement signals obtained by one of the rotational frequency meter (83), the inlet guide vane position gauge (85), the steam valve position gauge (82) and the flow rate meter (81), and based on an output increase command value to the gas turbine.

2. The two-shaft gas turbine having the steam injection mechanism according to Claim 1, wherein
the control system (100) is provided with a setting device (100b) configured so as to set a rotational frequency of the compressor (10), a flow rate of the steam (62) generated by the heat recovery steam generator (60) and supplied to the combustor (20), an opening of the inlet guide vane (12) provided to the compressor (10), and an opening of the steam valve (72) provided to the steam system (62a), respectively and
a calculator (100a) configured to calculate and output a command signal so as to operate an opening of the fuel valve (71), the steam valve (72), and the inlet guide vane (12), respectively, based on each measurement signal obtained by the rotational frequency meter (83), the flow rate meter (81), the inlet guide vane position gauge (85) and the steam valve position gauge (82), respectively, and the setting values set in the setting device (100b) and the output increase command value to the gas turbine.

3. The two-shaft gas turbine having the steam injection mechanism according to Claim 2, wherein
the calculator (100a) provided to the control system (100) is configured to control so as to increase an opening of the steam valve (72) after a rise in rotational frequency of the compressor (10) has been detected.

4. The two-shaft gas turbine having the steam injection mechanism according to Claim 2, wherein
the calculator (100a) provided to the control system (100) is configured to control so as to increase an opening operation of the steam valve (72), the inlet guide vane (12), and the fuel valve (71) in this order in response to the output increase command.

5. The two-shaft gas turbine having the steam injection mechanism according to Claim 3, wherein
the calculator (100a) provided to the control system (100) is configured to control so as to increase an opening of the steam valve (72) in a state in which an amount of steam (62) flowing into the combustor (20) is 20% through 30% of air (1) taken in the compressor (10), after the rotational frequency of the compressor (10) is raised by 2% through 7% of a rated rotational frequency, or preferably by 3% through 5% of the rated rotational frequency has been detected.

6. The two-shaft gas turbine having the steam injection mechanism according to Claim 1, wherein
the calculator (100a) provided to the control system (100) is configured to control the fuel valve (71) such that a close operation is performed on said fuel valve after an open operation is performed on a steam escape valve (73) provided to a branched system (73a) branched from the steam system (62a) to supply the combustor (20) with the steam (62) from the heat recovery steam generator (60) in a case that a deviation of the rotational frequency of the compressor (10) from a target value becomes large during a steam injection operation, and
the calculator (100a) is configured to control the fuel valve (71) such that a close operation is performed in a case that the deviation of the rotational frequency of the compressor (10) from the target value is small, and a deviation of a flow rate of the steam (62) supplied to the combustor (20) from a target value becomes large.

## Patentansprüche

1. Doppelwellen-Gasturbine, die einen Dampfeinspeisemechanismus besitzt und Folgendes umfasst: einen Kompressor (10), der eine Einlassleitschaufel (12) zum Steuern einer Durchflussmenge der Luft (1), die eingeleitet werden soll, besitzt,
eine Verbrennungsvorrichtung (20), um die Luft, die durch den Kompressor (10) verdichtet wurde, mit Brennstoff (4) zu mischen und die Luft mit dem Brennstoff (4) zu verbrennen, um ein Verbrennungsgas (6) zu erzeugen,
eine Turbine, die eine Hochdruckturbine (30), die durch das Verbrennungsgas (6), das in der Verbrennungsvorrichtung (20) erzeugt wird, angetrieben wird, und eine Niederdruckturbine (40), die auf einer stromabwärts gelegenen Seite der Hochdruckturbine (30) angeordnet ist, umfasst,
einen Wärmerückgewinnungs-Dampfgenerator (60), um Dampf (62) unter Verwendung eines Abgases (8), das aus der Niederdruckturbine (40) abgegeben wird, als eine Wärmequelle zu erzeugen,
ein Dampfsystem (62a), um die Verbrennungsvorrichtung (20) mit dem Dampf (62), der durch den Wärmerückgewinnungs-Dampfgenerator (60) erzeugt wird, zu versorgen,
ein Brennstoffventil (71), das an einem Brennstoffsystem (4a) vorgesehen ist, um die Verbrennungsvorrichtung (20) mit dem Brennstoff (4) zu versorgen und eine Durchflussmenge des Brennstoffs (4), der der Verbrennungsvorrichtung (20) zugeführt werden soll, zu steuern,
ein Dampfventil (72), das am Dampfsystem (62a) vorgesehen ist, um eine Durchflussmenge des Dampfs (62), der vom Wärmerückgewinnungs-Dampfgenerator (60) durch das Dampfsystem (62a) der Verbrennungsvorrichtung (20) zugeführt werden soll, zu steuern,
eine Last (50), die durch die Turbine angetrieben werden soll,
eine Kompressorwelle (11), um die Hochdruckturbine (30) und den Kompressor (10) miteinander zu verbinden, und
eine Niederdruckturbinenwelle (41), um die Niederdruckturbine (40) und die Last (50) miteinander zu verbinden, wobei
die Hochdruckturbine (30) konfiguriert ist, den Kompressor (10) anzutreiben, und die Niederdruckturbine (40) konfiguriert ist, die Last (50) anzutreiben,
**dadurch gekennzeichnet, dass**
die Doppelwellen-Gasturbine, die den Dampfeinspeisemechanismus besitzt, ferner Folgendes umfasst:
einen Drehfrequenzmesser (83), um eine Drehfrequenz des Kompressors (10) zu messen; und/oder ein Einlassleitschaufelpositions-Messgerät (85), um die Öffnung der Einlassleitschaufel (12), die am Kompressor (10) vorgesehen ist, zu messen; und/oder ein Dampfventilpositions-Messgerät (82), um die Öffnung des Dampfventils (72), das am Dampfsystem (62a) vorgesehen ist, zu messen; und/oder ein Durchflussmengenmesser (81), um die Durchflussmenge des Dampfs (62), der durch den Wärmerückgewinnungs-Dampfgenerator (60) erzeugt wird und der Verbrennungsvorrichtung (20) zugeführt werden soll, zu messen; und
ein Steuersystem (100), das konfiguriert ist, Anweisungssignale, um die Öffnung des Brennstoffventils (71), des Dampfventils (72) bzw. der Einlassleitschaufel (12) zu betätigen, auf der Grundlage von Messsignalen, die durch den Drehfrequenzmesser (83) oder das Einlassleitschaufelpositions-Messgerät (85) oder das Dampfventilpositions-Messgerät (82) oder den Durchflussmengenmesser (81) erhalten wurden, und auf der Grundlage eines Ausgabeerhöhungsanweisungswerts zu berechnen und zur Gasturbine auszugeben.

2. Doppelwellen-Gasturbine, die den Dampfeinspeisemechanismus nach Anspruch 1 besitzt, wobei
das Steuersystem (100) mit einer Einstellvorrichtung (100b) versehen ist, die konfiguriert ist, eine Drehfrequenz des Kompressors (10), eine Durchflussmenge des Dampfs (62), der durch den Wärmerückgewinnungs-Dampfgenerator (60) erzeugt wird und der Verbrennungsvorrichtung (20) zugeführt wird, eine Öffnung der Einlassleitschaufel (12), die am Kompressor (10) vorgesehen ist, bzw. eine Öffnung des Dampfventils (72), das am Dampfsystem (62a) vorgesehen ist, einzustellen, und
einen Rechner (100a), der konfiguriert ist, ein Anweisungssignal, um eine Öffnung des Brennstoffventils (71), des Dampfventils (72) bzw. der Einlassleitschaufel (12) zu betätigen, auf der Grundlage jedes Messsignals, das durch den Drehfrequenzmesser (83), den Durchflussmengenmesser (81), das Einlassleitschaufelpositions-Messgerät (85) bzw. das Dampfventilpositions-Messgerät (82) erhalten wird, der Einstellwerte, die in der Einstellvorrichtung (100b) gesetzt werden, und des Ausgabeerhöhungsanweisungswerts zu berechnen und zur Gasturbine auszugeben.

3. Doppelwellen-Gasturbine, die den Dampfeinspeisemechanismus nach Anspruch 2 besitzt, wobei
der Rechner (100a), der am Steuersystem (100) vorgesehen ist, konfiguriert ist, derart zu steuern, dass eine Öffnung des Dampfventils (72) erhöht wird, nachdem ein Anstieg einer Drehfrequenz des Kompressors (10) detektiert worden ist.

4. Doppelwellen-Gasturbine, die den Dampfeinspeisemechanismus nach Anspruch 2 besitzt, wobei
der Rechner (100a), der am Steuersystem (100) vorgesehen ist, konfiguriert ist, derart zu steuern, dass ein Öffnungsvorgang des Dampfventils (72), der Einlassleitschaufel (12) und des Brennstoffventils (71) in dieser Reihenfolge in Reaktion auf die Ausgabeerhöhungsanweisung vergrößert wird.

5. Doppelwellen-Gasturbine, die den Dampfeinspeisemechanismus nach Anspruch 3 besitzt, wobei
der Rechner (100a), der am Steuersystem (100) vorgesehen ist, konfiguriert ist, derart zu steuern, dass eine Öffnung des Dampfventils (72) in einem Zustand, in dem eine Menge von Dampf (62), der in die Verbrennungsvorrichtung (20) strömt, 20 % bis 30 % Luft (1), die in den Kompressor (10) aufgenommen wird, liegt, nachdem ein Anstieg der Drehfrequenz des Kompressors (10) um 2 % bis 7 % einer Nenndrehfrequenz oder bevorzugt um 3 % bis 5 % der Nenndrehfrequenz detektiert worden ist.

6. Doppelwellen-Gasturbine, die den Dampfeinspeisemechanismus nach Anspruch 1 besitzt, wobei
der Rechner (100a), der am Steuersystem (100) vorgesehen ist, konfiguriert ist, das Brennstoffventil (71) derart zu steuern, dass ein Schließvorgang am Brennstoffventil durchgeführt wird, nachdem ein Öffnungsvorgang an einem Dampfauslassventil (73) durchgeführt worden ist, das an einem verzweigten System (73a), das vom Dampfsystem (62a) abzweigt, vorgesehen ist, um die Verbrennungsvorrichtung (20) mit dem Dampf (62) vom Wärmerückgewinnungs-Dampfgenerator (60) zu versorgen, falls eine Abweichung der Drehfrequenz des Kompressors (10) von einem Sollwert während eines Dampfeinspeisevorgangs groß ist, und
der Rechner (100a) konfiguriert ist, das Brennstoffventil (71) derart zu steuern, dass ein Schließvorgang durchgeführt wird, falls die Abweichung der Drehfrequenz des Kompressors (10) vom Sollwert klein ist und eine Abweichung einer Durchflussmenge des Dampfs (62), der der Verbrennungsvorrichtung (20) zugeführt wird, von einem Zielwert groß ist.

## Revendications

1. Turbine à gaz à deux arbres ayant un mécanisme d'injection de vapeur, comprenant :
un compresseur (10) ayant une palette de guidage d'entrée (12) pour commander un débit d'air (1) devant être introduit,
une unité de combustion (20) pour mélanger l'air comprimé par le compresseur (10) avec un combustible (4) et pour brûler l'air avec le combustible (4) pour générer un gaz de combustion (6),
une turbine ayant une turbine à haute pression (30) entraînée par le gaz de combustion (6) généré dans l'unité de combustion (20) et une turbine à basse pression (40) disposée sur un côté aval de la turbine à haute pression (30),
un générateur de vapeur à récupération de chaleur (60) pour générer de la vapeur (60) en utilisant un gaz d'échappement (8) évacué depuis la turbine à basse pression (40) à titre de source de chaleur,
un système de vapeur (62a) pour alimenter l'unité de combustion (20) avec la vapeur (62) générée par le générateur de vapeur à récupération de chaleur (60),
une vanne de combustible (71) prévue sur un système de combustible (4a) pour alimenter l'unité de combustion (20) avec le combustible (4) et pour commander un débit du combustible (4) qu'il s'agit d'alimenter à l'unité de combustion (20),
une vanne de vapeur (72) prévue sur le système de vapeur (62a) et pour commander un débit de la vapeur (62) qu'il s'agit d'alimenter depuis le générateur de vapeur à récupération de chaleur (60) à l'unité de combustion (20) à travers le système de vapeur (62a),
une charge (50) devant être entraînée par la turbine,
un arbre de compresseur (11) pour connecter mutuellement la turbine à haute pression (30) avec le compresseur (10), et
un arbre de turbine à basse pression (41) pour connecter mutuellement la turbine à basse pression (40) avec la charge (50),
dans laquelle la turbine à haute pression (30) est configurée pour entraîner le compresseur (10), et la turbine à basse pression (40) est configurée pour entraîner la charge (50),
**caractérisée en ce que**
la turbine à gaz à deux arbres ayant le mécanisme d'injection de vapeur comprend en outre :
au moins un élément parmi un fréquencemètre rotationnel (83) pour mesurer une fréquence de rotation du compresseur (10) ; un indicateur de position de palette de guidage d'entrée (85) pour mesurer une ouverture de la palette de guidage d'entrée (12) prévue sur le compresseur (10) ; un indicateur de position de vanne de vapeur (82) pour mesurer l'ouverture de la vanne de vapeur (72) prévue sur le système de vapeur (62a) ; et un débitmètre (81) pour mesurer le débit de la vapeur (62) généré par le générateur de vapeur à récupération de chaleur (60) et qu'il s'agit d'alimenter à l'unité de combustion (20) ; et
un système de commande (100) configuré pour calculer et pour sortir vers la turbine à gaz des signaux d'ordre pour mettre en fonctionnement des ouvertures de la vanne de combustible (71), de la vanne de vapeur (72) et de la palette de guidage d'entrée (12), respectivement, sur la base de signaux de mesure obtenus par un élément parmi le fréquencemètre rotationnel (83), l'indicateur de position de palette de guidage d'entrée (85), l'indicateur de position de vanne de vapeur (82) et le débitmètre (81), et sur la base d'une valeur d'ordre d'augmentation de sortie.

2. Turbine à gaz à deux arbres ayant le mécanisme d'injection de vapeur selon la revendication 1, dans laquelle
le système de commande (100) est doté d'un dispositif de réglage (100b) configuré pour régler une fréquence de rotation du compresseur (10), un débit de la vapeur (62) générée par le générateur de vapeur à récupération de chaleur (60) et alimentée à l'unité de combustion (20), une ouverture de la palette de guidage d'entrée (12) prévue sur le compresseur (10), et une ouverture de la vanne de vapeur (72) prévue sur le système de vapeur (62a), respectivement, et
un calculateur (100a) configuré pour calculer et sortir vers la turbine à gaz un signal d'ordre pour mettre en fonctionnement une ouverture de la vanne de combustible (71), de la vanne de vapeur (72), et de la palette de guidage d'entrée (12), respectivement, sur la base de chaque signal de mesure obtenu par le fréquencemètre rotationnel (83), le débitmètre (81), l'indicateur de position de palette de guidage d'entrée (85), et l'indicateur de position de vanne de vapeur (82), respectivement, et les valeurs de réglage réglées dans le dispositif de réglage (100b) et la valeur d'ordre d'augmentation de sortie.

3. Turbine à gaz à deux arbres ayant le mécanisme d'injection de vapeur selon la revendication 2, dans laquelle
le calculateur (100a) prévu sur le système de commande (100) est configuré pour commander de manière à augmenter une ouverture de la vanne de vapeur (72) après avoir détecté une élévation dans la fréquence de rotation du compresseur (10).

4. Turbine à gaz à deux arbres ayant le mécanisme d'injection de vapeur selon la revendication 2, dans laquelle
le calculateur (100a) prévu sur le système de commande (100) est configuré pour commander de manière à augmenter une opération d'ouverture de la vanne de vapeur (72), de la palette de guidage d'entrée (12), et de la vanne de combustible (71) dans cet ordre en réponse à l'ordre d'augmentation de sortie.

5. Turbine à gaz à deux arbres ayant le mécanisme d'injection de vapeur selon la revendication 3, dans laquelle
le calculateur (100a) prévu sur le système de commande (100) est configuré pour commander de manière à augmenter une ouverture de la vanne de vapeur (72) dans un état dans lequel une quantité de vapeur (62) s'écoulant jusque dans l'unité de combustion (20) est constituée de 20 % à 30 % d'air (1) admis dans le compresseur (10), après avoir détecté une élévation de la fréquence de rotation du compresseur (10) à raison de 2 % à 7 % d'une fréquence de rotation nominale, ou de préférence à raison de 3 % à 5 % de la fréquence de rotation nominale.

6. Turbine à gaz à deux arbres ayant le mécanisme d'injection de vapeur selon la revendication 1, dans laquelle
le calculateur (100a) prévu sur le système de commande (100) est configuré pour commander la vanne de combustible (71) de sorte qu'une opération de fermeture est exécutée sur ladite vanne de combustible après exécution d'une opération d'ouverture sur une vanne d'échappement de vapeur (73) prévue sur un système ramifié (73a) ramifié depuis le système de vapeur (62a) pour alimenter l'unité de combustion (20) avec la vapeur (62) depuis le générateur de vapeur à récupération de chaleur (60) dans un cas où une déviation de la fréquence de rotation du compresseur (10) par rapport à une valeur cible devient importante pendant une opération d'injection de vapeur, et
le calculateur (100a) est configuré pour commander la vanne de combustible (71) de sorte qu'une opération de fermeture est exécutée dans un cas où la déviation de la fréquence de rotation du compresseur (10) par rapport à la valeur cible est faible, et une déviation d'un débit de la vapeur (62) alimentée à l'unité de combustion (20) par rapport à une valeur cible devient importante.
